(19) **Europäisches Patentamt European Patent Office Office européen des brevets**

(11) **EP 3 480 882 B1**

(12) **FASCICULE DE BREVET EUROPEEN**

(45) Date de publication et mention
de la délivrance du brevet:
**30.09.2020 Bulletin 2020/40**

(21) Numéro de dépôt: **17199951.9**

(22) Date de dépôt: **03.11.2017**

(51) Int Cl.:
*H01M 10/06* (2006.01)   *B60L 3/00* (2019.01)
*B60L 58/10* (2019.01)   *H02J 7/00* (2006.01)
*H01M 10/48* (2006.01)   *H01M 10/44* (2006.01)
*H02J 7/14* (2006.01)

(54) **PROCÉDÉ ET SYSTÈME DE RECHARGE POUR UNE BATTERIE D'ACCUMULATEURS D'UN VÉHICULE**

AUFLADEVERFAHREN UND -SYSTEM FÜR EINE BATTERIE AUS MEHREREN AKKUMULATOREN EINES FAHRZEUGS

METHOD AND SYSTEM FOR RECHARGING A BATTERY OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**08.05.2019 Bulletin 2019/19**

(73) Titulaire: **RENAULT s.a.s.**
**92100 Boulogne-Billancourt (FR)**

(72) Inventeurs:
• **SAINT-LEGER, GERARD**
**78000 VERSAILLES (FR)**
• **CHRISTIAN, HIRON**
**78690 LES ESSARTS LE ROI (FR)**

(56) Documents cités:
**JP-A- H06 296 302      US-A- 5 828 201**
**US-A1- 2006 176 024**

**Description**

La présente invention concerne un procédé de recharge pour une batterie d'accumulateurs notamment au plomb d'un véhicule ainsi qu'un système de recharge de la batterie d'accumulateurs mettant en œuvre un tel procédé.

L'invention concerne également un véhicule notamment un véhicule automobile comportant un tel système ainsi qu'un programme d'ordinateur comprenant des instructions de code de programme pour l'exécution des étapes de ce procédé.

Dans l'état de la technique, les véhicules automobiles sont aujourd'hui presque tous équipés d'une fonction d'arrêt automatique du moteur du type Stop&Start contribuant notamment à diminuer la consommation en carburant de ces véhicules.

De tels véhicules comprennent généralement des batteries d'accumulateurs au plomb encore appelée « batterie au plomb », comme source d'énergie électrique venant en complément d'un alternateur afin de mettre en œuvre une telle fonction. Cet usage de la batterie implique toutefois des contraintes importantes notamment sur l'état de charge de cette dernière. En effet, les performances de telles batteries peuvent être altérées du fait de l'apparition d'un phénomène connu de sulfatation réversible de ces batteries. Un tel phénomène de sulfatation est une des causes de vieillissement d'une batterie au plomb qui est restée déchargée pendant un certain temps avant la recharge. Ce phénomène a pour conséquence de diminuer les performances de ces batteries voire les diminuer de manière définitive si ces batteries ne sont pas correctement rechargées.

Dans l'optique de surmonter un tel inconvénient, il est connu dans les documents US006184650B1, US006130522A, EP2597719B1 et US006118251A de l'état de la technique de mettre en œuvre un processus de désulfatation prévoyant de démonter et d'extraire la batterie du véhicule afin de la placer sur un banc de charge. En étant ainsi agencée sur un tel banc, la batterie est alors soumise à une tension de charge élevée de l'ordre de 16 volts qui est alors appliquée à ses bornes pendant une durée de charge longue d'environ 24 heures afin de faire disparaître partiellement toute trace de sulfatation.

Le document JPH06-296302 décrit un procédé de recharge d'une batterie dans lequel lorsqu'on estime une sulfatation de la batterie probable, notamment à l'issue d'une période de temps donnée, on effectue une pleine charge de la batterie.

On notera qu'un tel processus de sulfatation ne peut être mis en œuvre pour une batterie restant agencé dans le véhicule. Effectivement, l'application d'une telle tension élevée aux bornes de cette batterie ne peut être maintenue aussi longtemps au risque d'entraîner une dégradation certaine des consommateurs électriques de ce véhicule.

La présente invention vise à pallier ces inconvénients liés à l'état de la technique.

Avantageusement, l'invention permet de détecter suffisamment tôt un début de sulfatation réversible au niveau d'une batterie afin d'appliquer une recharge adaptée permettant de faire disparaître toute trace de sulfatation dans cette dernière.

Dans ce dessein, l'invention concerne un procédé de recharge pour une batterie d'accumulateurs au plomb agencée dans un véhicule comportant une étape de détection d'un niveau de sulfatation notamment d'un niveau réversible de sulfatation de la batterie, ladite étape comprenant une sous-étape d'incrémentation d'une valeur d'un compteur de temps relatif à des périodes d'utilisation et de stationnement du véhicule, le procédé comportant une étape de déclenchement d'une charge de désulfatation de la batterie lorsque ladite valeur incrémentée est supérieure ou égale à une valeur seuil.

La sous-étape d'incrémentation comprend :

- une phase de détermination d'une durée pondérée de la période de stationnement du véhicule,
- une phase de détermination d'une durée pondérée de la période d'utilisation du véhicule,
- une phase de détermination de la valeur du compteur de temps à partir des durées pondérées déterminées respectivement des périodes de stationnement et d'utilisation du véhicule.

En particulier, le procédé comprend une phase de détermination d'une durée pondérée de la période de stationnement du véhicule de la sous-étape d'incrémentation comprenant :

- une sous-phase d'estimation d'une durée relative à la période de stationnement du véhicule,
- une sous-phase de mesure d'un état de charge de la batterie pendant la période de stationnement notamment à l'issue de cette période,
- une sous-phase de détermination d'un premier coefficient de pondération d'une durée de stationnement du véhicule en fonction d'un état de charge mesuré et de seuils d'état de charge,
- une sous-phase de détermination d'un deuxième coefficient de pondération d'une durée de stationnement du véhicule en fonction d'une durée relative à la période de stationnement estimée et de seuils de durée de stationnement,
- une sous-phase de calcul d'une durée pondérée relative à la période de stationnement du véhicule en fonction d'une durée estimée et de premier et deuxième coefficients calculés.

La phase de détermination d'une durée pondérée de la période d'utilisation du véhicule de la sous-étape d'incrémentation comprend

- une sous-phase d'estimation d'une durée relative à la période d'utilisation du véhicule,
- une sous-phase de mesure d'un état de charge de la batterie pendant la période d'utilisation notamment,
- une sous-phase de détermination d'un coefficient de pondération de la durée d'utilisation du véhicule en fonction d'un état de charge mesuré de la batterie et de seuils d'état de charge,
- une sous-phase de calcul d'une durée pondérée relative à la période d'utilisation du véhicule en fonction d'une durée estimée et du coefficient de pondération.

Avantageusement, l'étape de déclenchement comprend une sous-étape d'application d'une tension de désulfatation aux bornes de la batterie pendant une durée prédéfinie.

Avantageusement, le procédé comprend une sous-phase d'estimation d'une durée relative à la période de stationnement du véhicule qui est mise en œuvre dès lors que :

- une durée relative à la période d'utilisation du véhicule précédant de manière directe la période de stationnement du véhicule, est supérieure ou égale à une valeur de durée de référence, et/ou
- une durée relative à la période d'utilisation du véhicule succédant de manière directe la période de stationnement du véhicule, est supérieure ou égale à une valeur de durée de référence.

L'invention concerne également un système de recharge pour une batterie d'accumulateurs au plomb comprise dans un véhicule mettant en œuvre un tel procédé, le système comprenant un alternateur piloté et un capteur d'une grandeur indicatrice du fonctionnement de la batterie reliés aux bornes de la batterie ainsi qu'une unité de traitement agencée pour mettre en œuvre un tel procédé et connectée au capteur et à l'alternateur par l'intermédiaire d'un réseau de liaison de ce système.

En particulier, ce système comprend :

- le capteur d'une grandeur indicatrice du fonctionnement de la batterie qui est un capteur de courant de batterie, et/ou
- des systèmes de gestion de freinage et de gestion du fonctionnement du moteur du véhicule.

L'invention concerne aussi un programme d'ordinateur comprenant des instructions de code de programme pour l'exécution des étapes de ce procédé lorsque ledit programme est exécuté par une unité de traitement d'un tel système.

L'invention concerne en outre un véhicule notamment un véhicule automobile comprenant un tel système.

D'autres avantages et caractéristiques de l'invention apparaîtront mieux à la lecture de la description d'un mode de réalisation préféré qui va suivre, en référence aux figures, réalisé à titre d'exemple indicatif et non limitatif :

- la figure 1 représente un système de recharge pour une batterie d'accumulateurs comprise dans un véhicule, selon le mode de réalisation de l'invention ;
- les figures 2 et 3 représentent chacune un logigramme relatif à un procédé de recharge pour la batterie d'accumulateurs comprise dans le véhicule selon le mode de réalisation de l'invention, et
- la figure 4 illustre des courbes représentatives d'une valeur d'un compteur de temps relatif à des périodes d'utilisation et de stationnement du véhicule Vh et d'un état de charge de la batterie du véhicule pendant ces périodes d'utilisation et de stationnement ainsi que d'une tension de désulfatation appliquée aux bornes de ladite batterie, selon le mode de réalisation de l'invention.

Dans la description qui va suivre, des chiffres de référence identiques désignent des pièces identiques ou ayant des fonctions similaires.

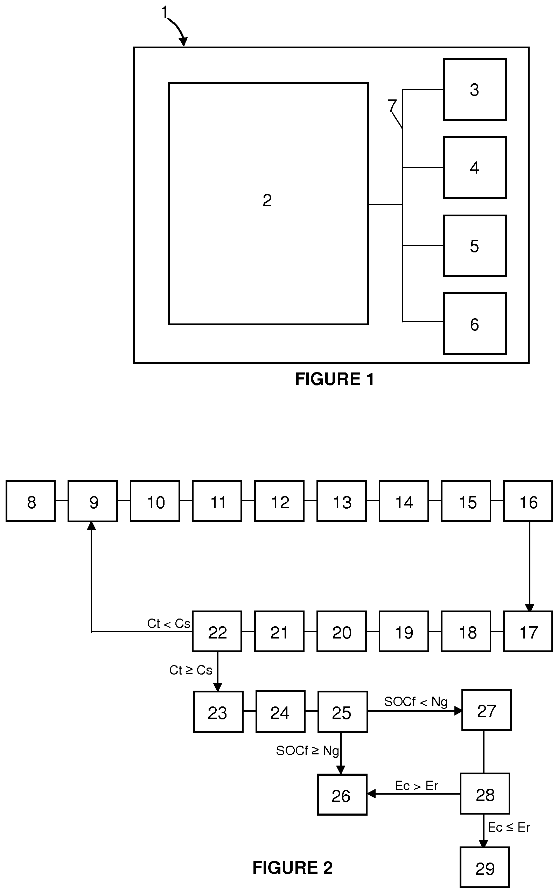

Sur la figure 1, est représenté un système de recharge 1 pour une batterie d'accumulateurs comprise dans un véhicule Vh par exemple un véhicule maritime, aérien ou terrestre. Dans le présent mode de réalisation, le véhicule Vh est de préférence un véhicule automobile comprenant un moteur thermique ou encore un moteur hybride.

Dans ce système 1, une telle batterie d'accumulateurs plus communément appelée « batterie », comprend un ensemble d'accumulateurs électriques reliés entre eux de façon à créer un générateur électrique de tension et de capacité désiré. Cette batterie est de préférence une batterie au plomb comprenant un ensemble d'accumulateurs au plomb-acide sulfurique raccordés en série, afin d'obtenir la tension désirée, et réunis dans un même boîtier.

Le système de recharge 1 comprend de manière non exhaustive et non limitative l'ensemble des éléments

# EP 3 480 882 B1

suivants :

- une unité de traitement 2 ;
- un alternateur piloté 3 ;
- un capteur 4 d'une grandeur indicatrice du fonctionnement de la batterie ;
- un système de gestion de freinage 5 du véhicule Vh et
- un système de gestion du fonctionnement du moteur 6 du véhicule Vh.

Dans ce système 1, l'unité de traitement 2 est reliée à chaque élément de cet ensemble. En particulier, on notera que dans la mesure où chaque élément de cet ensemble et l'unité de traitement 2 sont agencés de manière séparée du point de vue construction et/ou du point de vue fonctionnel, chacun de ces éléments et l'unité de traitement 2 peuvent être reliés entre eux par un réseau de liaison 7 par exemple au moyen d'un bus CAN ou d'une autre liaison électrique pour des échanges de données.

Cette unité de traitement 2 comprend au moins une unité de calcul comportant des ressources matérielles et logicielles plus précisément au moins un processeur coopérant avec des éléments de mémoire. Cette unité de calcul est apte à exécuter des instructions pour la mise en œuvre d'un programme d'ordinateur.

Dans ce système 1, l'alternateur piloté 3 qui tourne en permanence à une vitesse fonction du régime moteur, est relié aux bornes de la batterie et alimente les consommateurs électriques du véhicule Vh via cette batterie. Cet alternateur 3 est apte à être piloté par l'unité de traitement 2 afin de générer une tension Vc notamment une tension de charge ou de régulation aux bornes de la batterie qui est sensiblement constante et ce, en prélevant en permanence un couple sur le moteur thermique du véhicule Vh.

Dans ce système 1, le capteur 4 d'une grandeur indicatrice du fonctionnement de la batterie est de préférence un capteur de courant de batterie pour véhicule Vh. Ce capteur 4 comporte un module de mesure du courant de la batterie qui est de préférence intégré dans le circuit électrique de la batterie en étant relié aux bornes de cette dernière.

Le système de gestion de freinage 5 dans ce système de recharge 1, comprend un frein de stationnement encore appelé « frein de parking », et un ou plusieurs actionneurs de frein capables d'agir sur au moins une roue du véhicule Vh ainsi qu'un module de détection d'immobilisation du véhicule Vh. Ce système de gestion de freinage 5 est apte à transmettre des données d'information sur l'activation/désactivation du frein de stationnement à l'unité de traitement 2.

Le système de gestion du fonctionnement du moteur 6 comprend un module de contrôle du moteur permettant de piloter ce dernier ainsi qu'un module de détection d'arrêt/démarrage du moteur sur requête du conducteur du véhicule Vh. Ce système de gestion du fonctionnement du moteur 6 est apte à transmettre des données d'information sur l'arrêt/démarrage du moteur à l'unité de traitement 2.

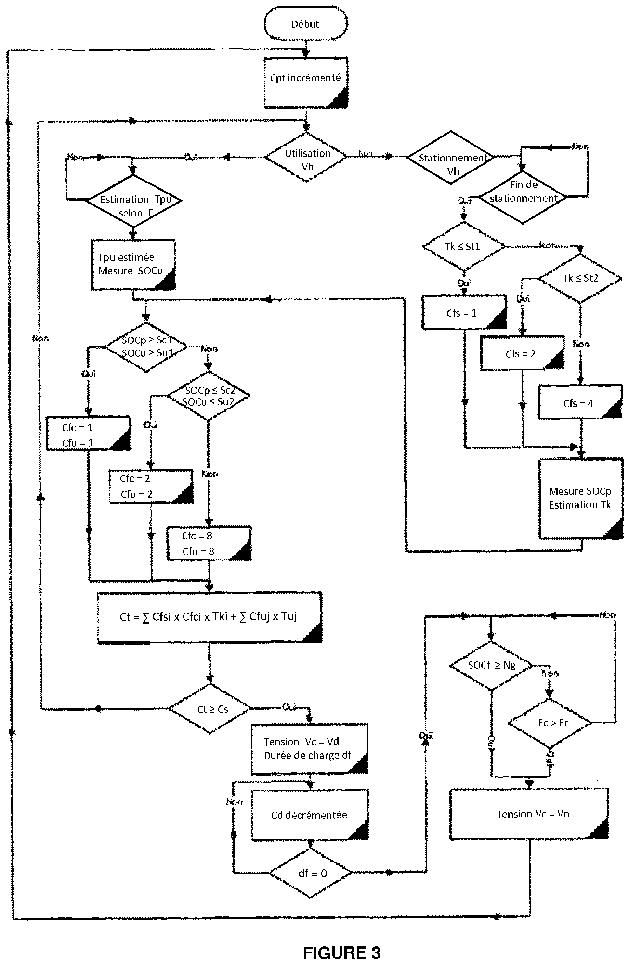

En référence aux figures 2, 3 et 4, l'invention porte également sur un procédé de recharge pour la batterie d'accumulateurs mis en œuvre par le système de recharge 1.

Ce procédé comprend une étape de détection 8 d'un niveau de sulfatation notamment d'un niveau réversible de sulfatation de la batterie. On notera qu'une telle étape de détection 8 conditionne la réalisation d'une autre étape du procédé relative au déclenchement 23 d'une charge de désulfatation de la batterie décrit par la suite.

Cette étape de détection 8 comprend une sous-étape d'incrémentation 9 d'une valeur Ct d'un compteur de temps Cpt relatif à des périodes d'utilisation et de stationnement du véhicule Vh. La valeur Ct du compteur de temps Cpt est initialement instanciée à une valeur qui est nulle. Lors de cette sous-étape, l'unité de traitement 2 effectue une incrémentation de cette valeur Ct en réalisant des opérations de calcul visant à déterminer une durée pondérée Tpk d'une période de stationnement du véhicule Vh ainsi qu'une durée pondérée Tpu d'une période d'utilisation du véhicule Vh. Ces durées pondérées Tpk, Tpu sont donc estimées dès lors que le véhicule Vh est utilisé c'est-à-dire que son moteur est démarré/arrêté et/ou que le frein de stationnement du véhicule Vh est activé/désactivé. Cette valeur Ct incrémentée du véhicule Vh correspond alors à la somme de ces durées pondérées Tpk, Tpu qui sont calculées au fur et à mesure que le véhicule Vh alterne entre des périodes d'utilisation et de stationnement. Lors de chaque période d'utilisation ou de stationnement du véhicule Vh, cette valeur Ct est donc définie par l'équation suivante : $Ct = Tpk + Tpu$

Cette sous-étape d'incrémentation 9 comprend une phase de détermination 10 de la durée pondérée Tpk de la période de stationnement du véhicule Vh. Lors de cette phase 10, l'unité de traitement 2 détermine cette durée pondérée Tpk en fonction de premier et deuxième coefficients de pondération Cfc, Cfs de la durée de stationnement du véhicule Vh résultant de mesures d'un état de charge SOCp de la batterie réalisées par le capteur de courant 4 de batterie et d'estimations d'une durée Tk relative à la période de stationnement du véhicule Vh. Ainsi qu'il est décrit pas la suite, lors de cette phase 10, l'unité de traitement 2 détermine cette durée pondérée Tpk en mettant en œuvre l'équation suivante : $Tpk = Cfs \times Cfc \times Tk$

Cette phase de détermination 10 de la durée pondérée Tpk est de préférence réalisée à la fin de la période de stationnement du véhicule Vh et l'état de charge SOCp pris en compte lors de cette phase 10 est un état de charge SOCp valide à la fin de cette période de stationnement.

Une telle phase de détermination 10 comprend alors une sous-phase d'estimation 11 de la durée Tk relative à la période de stationnement du véhicule Vh. Cette sous-phase 11 est mise en œuvre dès lors que :

- une durée d1 relative à une période d'utilisation du véhicule Vh précédant de manière directe la période de stationnement du véhicule Vh, est supérieure ou égale à une valeur de durée de référence dr, soit $d1 \geq dr$ et/ou
- une durée d2 relative à une période d'utilisation du véhicule Vh succédant de manière directe la période de stationnement du véhicule Vh, est supérieure ou égale à cette valeur de durée de référence dr, soit $d2 \geq dr$.

Cette valeur de durée de référence dr est configurable. Dans un exemple, elle peut correspondre à une durée de 5 minutes d'utilisation du véhicule Vh. Dans ce contexte, on comprend qu'une telle sous-phase d'estimation 11 de la durée Tk est alors réalisée dès lors que le véhicule Vh a été utilisé juste avant et/ou juste après la période de stationnement au moins pendant une durée d1, d2 de 5 minutes.

Lors de la réalisation de cette sous-phase 11, l'unité de traitement 2 reçoit des systèmes de gestion de freinage 5 et de gestion du fonctionnement du moteur 6 du véhicule Vh, des données d'information indiquant le début et la fin de la période de stationnement du véhicule Vh, ces données sont relatives au démarrage/arrêt du moteur du véhicule Vh et/ou à l'activation/désactivation du frein de stationnement de ce dernier. Sur la base de ces données d'information, l'unité de traitement 2 estime alors la durée Tk relative à la période de stationnement du véhicule Vh.

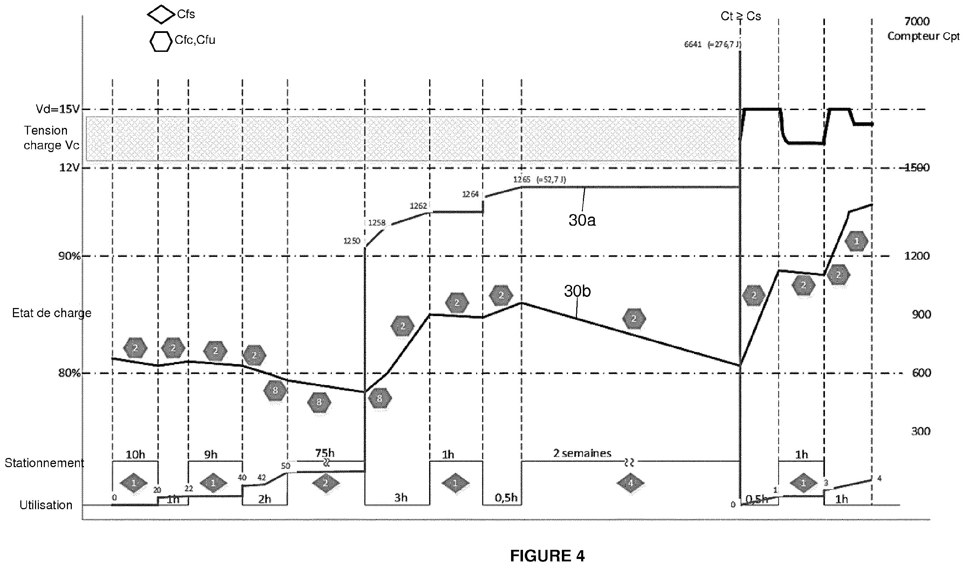

La phase de détermination 10 comporte ensuite une sous-phase de mesure 12 de l'état de charge SOCp de la batterie pendant la période de stationnement notamment à l'issue de cette période. Lors de cette sous-phase 12, l'unité de traitement 2 réalise au moins une mesure de l'état de charge SOCp de la batterie en étant connectée au capteur de courant 4 de batterie. Dans le présent mode de réalisation, plusieurs mesures de cet état de charge SOCp sont réalisées durant la période de stationnement du véhicule Vh ou encore à l'issue de cette période de stationnement par exemple lorsque la présence du conducteur qui n'était plus dans l'habitacle du véhicule Vh est alors détectée pour la réalisation d'un démarrage du moteur du véhicule Vh s'inscrivant dans le cadre d'une période d'utilisation de ce dernier. Sur la figure 4, dans un exemple de réalisation de l'invention, la variation de cet état de charge SOCp de la batterie durant la période de stationnement du véhicule Vh, est illustrée par la courbe référencée 30b.

Par la suite, cette phase 10 prévoit une sous-phase de détermination 13 du premier coefficient de pondération Cfc de la durée de stationnement du véhicule Vh en fonction de l'état de charge SOCp mesuré et de seuils d'état de charge Sc1, Sc2. Plus précisément lors de cette sous-phase 13, l'unité de traitement 2 réalise des opérations de calcul visant à déterminer ce premier coefficient de pondération Cfc à partir de comparaisons du dernier état de charge SOCp mesuré lors de la sous-phase de mesure 12 avec les premier et deuxième seuils d'état de charge Sc1, Sc2. Ces premier et deuxième seuils d'état de charge Sc1, Sc2 correspondent de préférence pour le premier seuil Sc1 à un état de charge de 90% de la capacité de la batterie et pour le deuxième seuil Sc2 à un état de charge de 80%.

Dans ce contexte, lors de cette sous-phase 13 :

- si l'état de charge SOCp mesuré est supérieur ou égal au premier seuil Sc1 soit $SOCp \geq Sc1$, alors le premier coefficient de pondération Cfc est égal à 1, soit Cfc = 1 ;
- si l'état de charge SOCp mesuré est inférieur au premier seuil Sc1 et supérieur au deuxième seuil Sc2 soit $Sc1 > SOCp > Sc2$, alors le premier coefficient de pondération Cfc est égal à 2, soit Cfc = 2
- si l'état de charge SOCp mesuré est inférieur ou égal au deuxième seuil Sc2 soit $SOCp \leq Sc2$, alors le premier coefficient de pondération Cfc est égal à 8, soit Cfc = 8.

Ainsi, ce premier coefficient de pondération Cfc contribue à obtenir la durée pondérée Tpk de stationnement du véhicule Vh à partir de la durée Tk mesurée de ce stationnement. Dans ces conditions, la durée pondérée Tpk est alors :

- équivalente à la durée Tk mesurée soit Tpk = Tk lorsque le premier coefficient de pondération Cfc est neutre en étant égal à 1, c'est-à-dire Cfc = 1 ;
- deux fois plus importante que la durée Tk mesurée soit Tpk = 2 x Tk lorsque le premier coefficient de pondération Cfc est égal à 2, c'est-à-dire Cfc = 2, et
- huit fois plus importante que la durée Tk mesurée soit Tk = 8 x Tk lorsque le premier coefficient de pondération Cfc est égal à 8, c'est-à-dire Cfc = 8.

Autrement dit, en référence à la courbe référencée 30a sur la figure 4 relative à la valeur Ct incrémentée du compteur de temps Cpt, ce premier coefficient Cfc pondère alors le durée Tk mesurée de stationnement de manière ce qu'une durée Tk de 1 heure mesurée de stationnement correspondent à une durée pondérée Tpk :

- équivalente à la durée Tk mesurée soit 1 heure lorsque ce premier coefficient Cfc est égal à 1, c'est-à-dire Cfc = 1 ;
- de 2 heures lorsque ce premier coefficient Cfc est égal à 2, c'est-à-dire Cfc = 2, et

- de 8 heures lorsque ce premier coefficient Cfc est égal à 8, c'est-à-dire Cfc = 8.

Ensuite, la phase de détermination 10 comporte une sous-phase de détermination 14 du deuxième coefficient de pondération Cfs de la durée de stationnement du véhicule Vh en fonction de la durée Tk relative à la période de stationnement estimée et de seuils de durée de stationnement St1, St2. Plus précisément, lors de cette sous-phase 14, l'unité de traitement 2 réalise des opérations de calcul visant à déterminer le deuxième coefficient de pondération Cfs à partir de comparaisons de cette durée Tk estimée lors de la sous-phase d'estimation 11 avec les premier et deuxième seuils de durée de stationnement St1, St2. Ces premier et deuxième seuils de durée de stationnement St1, St2 correspondent de préférence pour le premier seuil St1 à une durée de stationnement de 72 heures soit 3 jours et pour le deuxième seuil St2 à une durée de stationnement de 168 heures, soit 7 jours.

Dans ce contexte, lors de cette sous-phase 14 :

- si la durée Tk estimée est inférieure ou égale au premier seuil St1 soit Tk $\leq$ St1, alors le deuxième coefficient de pondération Cfs est égal à 1, soit Cfs = 1 ;
- si la durée Tk estimée est supérieure au premier seuil St1 et inférieure au deuxième seuil St2 soit St1 < Tk < St2, alors le deuxième coefficient de pondération Cfc est égal à 2, soit Cfc = 2, et
- si la durée Tk estimée est supérieure ou égale au deuxième seuil St2 soit Tk $\geq$ St2, alors le deuxième coefficient de pondération Cfs est égal à 4, soit Cfs = 4.

Ainsi, ce deuxième coefficient de pondération Cfs contribue à obtenir la durée pondérée Tpk de stationnement du véhicule Vh à partir de la durée Tk mesurée de ce stationnement. Dans ces conditions, la durée pondérée Tpk est alors :

- équivalente à la durée Tk mesurée soit Tpk = Tk lorsque le deuxième coefficient de pondération Cfs est neutre en étant égal à 1, c'est-à-dire Cfs = 1 ;
- deux fois plus importante que la durée Tk mesurée soit Tpk = 2 x Tk lorsque le deuxième coefficient de pondération Cfs est égal à 2, c'est-à-dire Cfs = 2, et
- quatre fois plus importante que la durée Tk mesurée soit Tk = 4 x Tk lorsque le deuxième coefficient de pondération Cfs est égal à 4, c'est-à-dire Cfs = 4.

Autrement dit, en référence à la courbe référencée 30a sur la figure 4 relative à la valeur Ct incrémentée du compteur de temps Cpt, ce deuxième coefficient Cfs pondère alors le durée Tk mesurée de stationnement de manière ce qu'une durée Tk mesurée de 24 heures de stationnement soit 1 jour, corresponde à une durée pondérée Tpk :

- équivalente à la durée Tk mesurée soit 24 heures lorsque ce deuxième coefficient Cfs est égal à 1, c'est-à-dire Cfs = 1 ;
- de 48 heures, soit 2 jours, lorsque ce deuxième coefficient Cfs est égal à 2, c'est-à-dire Cfs = 2, et
- de 96 heures, soit 4 jours, lorsque ce deuxième coefficient Cfs est égal à 4, c'est-à-dire Cfs = 4.

La phase de détermination 10 comprend par la suite une sous-phase de calcul 15 de la durée pondérée Tpk relative à la période de stationnement du véhicule Vh en fonction de la durée Tk estimée et des premier et deuxième coefficients calculés Cfc, Cfs. Lors de cette sous-phase 15, l'unité de traitement 2 réalise des opérations de calcul visant à déterminer cette durée pondérée Tpk en mettant en œuvre l'équation suivante : Tpk = Cfs x Cfc x Tk

La sous-étape d'incrémentation 9 comprend également une phase de détermination 16 de la durée pondérée Tpu de la période d'utilisation du véhicule Vh. Lors de cette phase 16, l'unité de traitement 2 détermine cette durée pondérée Tpu en fonction d'un coefficient de pondération Cfu de la durée d'utilisation du véhicule Vh résultant de mesures d'état de charge SOCu de la batterie réalisées par le capteur de courant 4 de batterie, et d'estimations d'une durée Tu relative à la période d'utilisation du véhicule Vh.

Cette phase 16 est alors initiée, dès lors que l'unité de traitement 2 reçoit des systèmes de gestion de freinage 5 et de gestion du fonctionnement du moteur 6 du véhicule Vh, des données d'information relatives notamment à la désactivation du frein de stationnement du véhicule Vh et au démarrage du moteur de ce dernier, et elle se termine lorsque la période de stationnement du véhicule Vh débute.

Ainsi qu'il est décrit pas la suite, lors de cette phase 16, l'unité de traitement 2 détermine cette durée pondérée Tpu en mettant en œuvre l'équation suivante : Tpu = Cfu x Tu. On notera que cette durée pondérée Tpu est de préférence calculée par l'unité de traitement 2 de manière récurrente durant toute cette période d'utilisation du véhicule Vh selon une fréquence F configurable qui peut être de 1 minute.

Cette phase de détermination 16 comprend une sous-phase d'estimation 17 de la durée Tu relative à la période d'utilisation du véhicule Vh. Lors de la réalisation de cette sous-phase 17, l'unité de traitement 2 calcule de manière récurrente selon la fréquence F, la durée Tu écoulée depuis le début de la période d'utilisation du véhicule Vh.

La phase de détermination 16 comporte ensuite une sous-phase de mesure 18 de l'état de charge SOCu de la batterie pendant la période d'utilisation. Lors de cette sous-phase 18, l'unité de traitement 2 réalise de manière récurrente selon la fréquence F la mesure de l'état de charge SOCu de la batterie en étant connectée au capteur de courant 4 de batterie. Sur la figure 4, dans un exemple de réalisation de l'invention, la variation de cet état de charge SOCu de la batterie durant la période d'utilisation du véhicule Vh, est illustrée par la courbe référencée 30b.

Cette phase 16 comprend ensuite une sous-phase de détermination 19 du coefficient de pondération Cfu de la durée d'utilisation du véhicule Vh en fonction de l'état de charge SOCu de la batterie mesuré et de seuils d'état de charge Su1, Su2. Cette sous-phase 19 est réalisée de manière récurrente selon la fréquence F et en fonction du dernier état de charge SOCu mesuré et des seuils d'état de charge Su1, Su2. Plus précisément lors de cette sous-phase 19, l'unité de traitement 2 réalise des opérations de calcul visant à déterminer le coefficient de pondération Cfu à partir de comparaisons de l'état de charge SOCu mesuré de manière récurrente selon la fréquence F lors de la sous-phase de mesure 18 avec les premier et deuxième seuils d'état de charge Su1, Su2. Ces premier et deuxième seuils d'état de charge Su1, Su2 correspondent de préférence pour le premier seuil Su1 à un état de charge de 90% de la capacité de la batterie et pour le deuxième seuil Su2 à un état de charge de 80%.

Dans ce contexte, lors de cette sous-phase 19 :

- si l'état de charge SOCu mesuré est supérieur ou égal au premier seuil Su1 soit $SOCu \geq Su1$, alors le coefficient de pondération Cfu est égal à 1, soit Cfu = 1 ;
- si l'état de charge SOCu mesuré est inférieur au premier seuil Su1 et supérieur au deuxième seuil Su2 soit $Su1 > SOCu > Su2$, alors le coefficient de pondération Cfu est égal à 2, soit Cfu = 2, et
- si l'état de charge SOCu mesuré est inférieur ou égal au deuxième seuil Su2 soit $SOCu \leq Su2$, alors le coefficient de pondération Cfu est égal à 8, soit Cfu = 8.

Ainsi, ce coefficient de pondération Cfu contribue à obtenir la durée pondérée Tpu d'utilisation du véhicule Vh à partir de la durée Tu mesurée d'utilisation du véhicule Vh. Dans ces conditions, la durée pondérée Tpu est alors :

- équivalente à la durée Tu mesurée soit Tpu = Tu lorsque le coefficient de pondération Cfu est neutre en étant égal à 1, c'est-à-dire Cfu = 1 ;
- deux fois plus importante que la durée Tu mesurée soit Tpu = 2 x Tu lorsque le coefficient de pondération Cfu est égal à 2, c'est-à-dire Cfu = 2, et
- huit fois plus importante que la durée Tu mesurée soit Tu = 8 x Tu lorsque le coefficient de pondération Cfu est égal à 8, c'est-à-dire Cfu = 8.

Autrement dit, en référence à la courbe référencée 30a sur la figure 4 relative à la valeur Ct incrémentée du compteur de temps Cpt, ce coefficient Cfu pondère alors le durée Tu mesurée d'utilisation de manière à ce qu'une durée Tu de 1 heure mesurée d'utilisation corresponde à une durée pondérée Tpu :

- équivalente à la durée Tu mesurée soit une heure lorsque ce coefficient Cfu est égal à 1, c'est-à-dire Cfu = 1 ;
- de deux heures lorsque ce coefficient Cfu est égal à 2, c'est-à-dire Cfu = 2, et
- de huit heures lorsque ce coefficient Cfu est égal à 8, c'est-à-dire Cfu = 8.

On notera que lors de la réalisation de la phase de détermination 16 de la durée pondérée Tpu, les sous-phases d'estimation 17 et de mesure 18 sont de préférence mises en œuvre de manière simultanée.

La phase de détermination 16 comprend par la suite une sous-phase de calcul 20 de la durée pondérée Tpu relative à la période d'utilisation du véhicule Vh en fonction de la durée Tu estimée et du coefficient de pondération Cfu. Lors de cette sous-phase 20, l'unité de traitement 2 réalise des opérations de calcul visant à déterminer durant l'utilisation du véhicule Vh de manière récurrente selon la fréquence F, cette durée pondérée Tpu en mettant en œuvre l'équation suivante : Tpu = Cfu x Tu

Lors du déroulement de cette sous-phase 20, dès lors que l'unité de traitement 2 reçoit des systèmes de gestion de freinage 5 et de gestion du fonctionnement du moteur 6 du véhicule Vh, des données d'information relatives à la fin de la période d'utilisation du véhicule Vh, la durée pondérée Tpu est égale alors à la dernière durée pondérée Tpu calculée lors de cette période d'utilisation.

La sous-étape d'incrémentation 9 comprend par la suite une phase de détermination 21 de la valeur Ct du compteur de temps Cpt à partir des durées pondérées Tpk, Tpu déterminées respectivement des périodes de stationnement et d'utilisation du véhicule Vh. Lors de cette phase 21, la valeur Ct du compteur de temps Cpt est incrémentée après chaque période de stationnement et d'utilisation d'une valeur correspondant respectivement à la durée pondérée Tpk de la période stationnement du véhicule Vh et à la durée pondérée Tpu de la période d'utilisation du véhicule Vh. On comprend donc que la valeur Ct incrémentée correspond donc à la somme de toutes les durées pondérées Tpki, Tpuj respectivement des périodes de stationnement et d'utilisation du véhicule Vh calculées durant cette sous-étape d'incrémentation 9 en référence à l'équation suivante qui est mise en œuvre par l'unité de traitement 2 :

$$Ct = \sum Tpki + \sum Tpuj = \sum Cfsi \times Cfci \times Tki + \sum Cfuj \times Tuj,$$

avec :

i = 0, 1, ..., n

j = 0, 1, ..., n

L'étape de détection 8 d'un niveau de sulfatation comprend ensuite une sous-étape de comparaison 22 de la valeur Ct incrémentée avec une valeur de seuil Cs. Cette sous étape de comparaison 22 est alors réalisée de préférence à chaque incrémentation de la valeur Ct.

La valeur seuil Cs est une valeur prédéfinie qui est configurable. Dans le présent mode de réalisation, cette valeur Cs est configurée pour être égale à 4320 heures soit 180 jours. Cette valeur de seuil Cs correspond ici à un usage nominal du véhicule Vh qui signifie que la recharge et donc la désulfatation de la batterie a lieu tous les 180 jours prenant en compte la somme des durées de stationnement et d'utilisation de ce véhicule Vh. Les conditions nominales liées à cette valeur de seuil Cs sont alors une période de stationnement inférieure ou égale à 72 heures soit 3 jours, et un état de charge de la batterie supérieur ou égal à 85%. Ces conditions nominales représentent un usage moyen permettant une sulfatation raisonnablement faible et réversible. Ainsi, cette valeur de seuil Cs permet lors de la sous-étape de comparaison 22 de détecter un niveau de sulfatation faible et réversible de la batterie.

Lors de cette sous-étape de comparaison 22, si la valeur Ct est supérieure ou égale à la valeur seuil Cs, soit $Ct \geq Cs$, le procédé prévoit alors une étape de déclenchement 23 d'une charge de désulfatation de la batterie décrite par la suite. A l'inverse, si la valeur Ct est inférieure à la valeur seuil Cs, soit Ct < Cs, alors le procédé prévoit une nouvelle réalisation de la sous-étape d'incrémentation 9.

On notera qu'une telle étape de détection 8 du procédé participe à améliorer l'identification d'un faible niveau de sulfatation notamment réversible de la batterie en prenant notamment en compte des paramètres comme la durée de stationnement du véhicule Vh ainsi que l'état de charge de la batterie qui peuvent être une cause d'aggravation de la sulfatation dans la batterie.

Dès lors que la valeur Ct incrémentée est supérieure ou égale à cette valeur seuil Cs, le procédé prévoit alors l'étape de déclenchement 23 de la charge de désulfatation de la batterie. Cette étape de déclenchement 23 comprend une sous-étape d'application 24 d'une tension Vd de désulfatation aux bornes de la batterie. L'application de cette tension Vd de désulfatation aux bornes de la batterie est réalisée durant une durée de charge df prédéfinie et configurable qui est par exemple de 60 minutes soit 1 heure, soit df = 60 minutes. Durant la réalisation de cette sous-étape 24 une valeur Cd d'un compteur de temps Cpd ayant initiale égale à la durée de charge df est alors décrémentée jusqu'à une valeur nulle soit 0, selon une fréquence Fd qui peut être de 1 minute.

Lors de cette sous-étape d'application 24, l'unité de traitement 2 pilote l'alternateur 3 de sorte à générer une tension Vc qui est égale à une tension Vd de désulfatation qui est une tension de charge pouvant être de 15 volts, aux bornes de la batterie.

En référence à la figure 4, on notera que durant cette sous-étape 24, les phases de tension régulée à la tension Vd de désulfatation peuvent être interrompues par des séquences de décharge batterie, notamment si le véhicule Vh est équipé d'une fonction Stop&Start, et ce, durant les phases d'arrêt du moteur. Dans ce contexte, ces séquences de décharges batterie sont alors décomptées de la durée de charge df et augmentent d'autant la durée de charge df pour la recharge et donc la désulfatation de la batterie.

Cette sous-étape 24 comprend une phase de vérification 25 d'un état de charge SOCf de la batterie à l'issue de la durée de charge df. Lors de cette phase 25, dès lors que la valeur Cd décrémentée du compteur de temps Cpd est nulle, l'unité de traitement 2 met en œuvre des opérations de calcul visant à comparer l'état de charge SOCf de la batterie mesuré à l'issue de la durée de charge df avec une valeur de charge Ng prédéfinie et configurable qui est par exemple de 95%, soit Ng = 95%. Si l'état de charge SOCf mesuré de la batterie est supérieur ou égal à cette valeur de charge Ng, soit $SOCf \geq Ng$, alors la phase 25 comprend alors une sous-phase d'application 26 d'une tension de régulation Vn nominale aux bornes de la batterie. Lors de cette sous-phase d'application 26, l'unité de traitement 2 pilote alors l'alternateur 3 pour appliquer une tension Vc qui est égale à cette tension de régulation Vn nominale aux bornes de la batterie puisque le niveau de sulfatation a été réduit voire supprimé. Cette tension de régulation Vn nominale est inférieure à la tension Vd de désulfatation.

A l'inverse, si l'état de charge de la batterie SOCf est inférieur à la valeur de charge Ng, soit SOCf < Ng, cette phase 25 comprend alors une sous-phase de détermination 27 d'un écart de recharge Ec entre un état de charge SOCd de la batterie mesuré au début de la réalisation de la sous-étape d'application 24 de la tension Vd, soit au début de la durée de charge df, et l'état de charge SOCf mesuré à la fin de la durée de charge df.

Cette phase 25 comprend ensuite une sous-phase de comparaison 28 de cet écart de recharge Ec avec un écart de recharge de référence Er. Cet écart de recharge de référence Er est configurable et peut être par exemple égal à 10%, soit Er = 10%.

Si cet écart de recharge Ec est inférieur ou égal à l'écart de recharge de référence Er, soit Ec $\leq$ Er, alors cette phase 25 comprend alors une sous-phase d'application 29 de la tension Vd de désulfatation aux bornes de la batterie et ce jusqu'à ce que l'état de charge de la batterie soit supérieur à la valeur de charge Ng ou que l'écart de recharge Ec soit supérieur à l'écart de recharge de référence Er.

Si à l'inverse, l'écart de recharge Ec est supérieur à l'écart de recharge de référence Er, soit Ec > Er, alors la phase 25 prévoit la réalisation de la sous-phase d'application 26 de la tension de régulation Vn nominale aux bornes de la batterie.

L'invention concerne aussi le programme d'ordinateur comprenant des instructions de code de programme pour l'exécution des étapes de ce procédé. Ce programme est de préférence exécuté par l'unité de traitement 2 du système de recharge 1.

Ainsi, l'invention en tenant compte de l'usage fait du véhicule Vh, en particulier sur les longues périodes de stationnement contribue à améliorer la fiabilité de la batterie de manière pérenne dans le temps et donc celle du véhicule Vh et participe aussi à freiner le vieillissement de cette batterie. De plus, l'invention permet également de limiter autant que possible les phases de fonctionnement à haute tension de l'alternateur 3 lors de la recharge de la batterie durant une durée de charge courte sensiblement égale à la durée df, qui peuvent endommager certains consommateurs électriques ou provoquer une surconsommation de carburant.

## Revendications

1. Procédé de recharge pour une batterie d'accumulateurs au plomb agencée dans un véhicule (Vh) comportant une étape de détection (8) d'un niveau de sulfatation notamment d'un niveau réversible de sulfatation de la batterie, ladite étape comprenant une sous-étape d'incrémentation (9) d'une valeur (Ct) d'un compteur de temps (Cpt) relatif à des périodes d'utilisation et de stationnement du véhicule (Vh), le procédé comportant une étape de déclenchement (23) d'une charge de désulfatation de la batterie lorsque ladite valeur (Ct) incrémentée est supérieure ou égale à une valeur seuil (Cs), ledit procédé étant **caractérisé en ce que** la sous-étape d'incrémentation (9) comprend :

   - une phase de détermination (10) d'une durée pondérée (Tpk) de la période de stationnement du véhicule (Vh),
   - une phase de détermination (16) d'une durée pondérée (Tpu) de la période d'utilisation du véhicule (Vh),
   - une phase de détermination (21) de la valeur (Ct) du compteur de temps (Cpt) à partir des durées pondérées (Tpk, Tpu) déterminées respectivement des périodes de stationnement et d'utilisation du véhicule (Vh),

   la phase de détermination (16) d'une durée pondérée (Tpu) de la période d'utilisation du véhicule (Vh) comprenant :

   - une sous-phase d'estimation (17) d'une durée (Tu) relative à la période d'utilisation du véhicule (Vh),
   - une sous-phase de mesure (18) d'un état de charge (SOCu) de la batterie pendant la période d'utilisation,
   - une sous-phase de détermination (19) d'un coefficient de pondération (Cfu) de la durée d'utilisation du véhicule (Vh) en fonction d'un état de charge (SOCu) mesuré de la batterie et de seuils d'état de charge (Su1, Su2),
   - une sous-phase de calcul (20) d'une durée pondérée (Tpu) relative à la période d'utilisation du véhicule (Vh) en fonction de la durée (Tu) estimée et du coefficient de pondération (Cfu).

2. Procédé selon la revendication 1, **caractérisé en ce qu'**une phase de détermination (10) d'une durée pondérée (Tpk) de la période de stationnement du véhicule (Vh) de la sous-étape d'incrémentation (9) comprend :

   - une sous-phase d'estimation (11) d'une durée (Tk) relative à la période de stationnement du véhicule (Vh),
   - une sous-phase de mesure (12) d'un état de charge (SOCp) de la batterie pendant la période de stationnement notamment à l'issue de cette période,
   - une sous-phase de détermination (13) d'un premier coefficient de pondération (Cfc) d'une durée de stationnement du véhicule (Vh) en fonction d'un état de charge (SOCp) mesuré et de seuils d'état de charge (Sc1, Sc2),
   - une sous-phase de détermination (14) d'un deuxième coefficient de pondération (Cfs) d'une durée de stationnement du véhicule (Vh) en fonction d'une durée (Tk) relative à la période de stationnement estimée et de seuils de durée de stationnement (St1, St2),
   - une sous-phase de calcul (15) d'une durée pondérée (Tpk) relative à la période de stationnement du véhicule (Vh) en fonction d'une durée (Tk) estimée et des premier et deuxième coefficients calculés (Cfs, Cfc),.

**3.** Procédé selon l'une quelconque des revendications précédentes, **caractérisé en ce que** l'étape de déclenchement (23) comprend une sous-étape d'application (24) d'une tension (Vd) de désulfatation aux bornes de la batterie pendant une durée (df) prédéfinie.

**4.** Procédé selon l'une quelconque des revendications précédentes, **caractérisé en ce qu'**une sous-phase d'estimation (11) d'une durée (Tk) relative à la période de stationnement du véhicule (Vh) est mise en œuvre dès lors que :

- une durée (d1) relative à la période d'utilisation du véhicule (Vh) précédant de manière directe la période de stationnement du véhicule (Vh), est supérieure ou égale à une valeur de durée de référence (dr), et/ou
- - une durée (d2) relative à la période d'utilisation du véhicule (Vh) succédant de manière directe la période de stationnement du véhicule (Vh), est supérieure ou égale à une valeur de durée de référence dr.

**5.** Système de recharge (1) pour une batterie d'accumulateurs au plomb comprise dans un véhicule (Vh) mettant en œuvre le procédé selon l'une quelconque des revendications précédentes, le système (1) comprenant un alternateur piloté (3) et un capteur d'une grandeur indicatrice du fonctionnement de la batterie reliés aux bornes de la batterie ainsi qu'une unité de traitement (2) agencée pour mettre en œuvre le procédé selon l'une quelconque des revendications précédentes et connectée au capteur et à l'alternateur (3) par l'intermédiaire d'un réseau de liaison (7) de ce système (1).

**6.** Système (1) selon la revendication précédente, **caractérisé en ce que** :

- le capteur d'une grandeur indicatrice du fonctionnement (4) de la batterie est un capteur de courant de batterie, et/ou
- le système (1) comprend des systèmes de gestion de freinage (5) et de gestion du fonctionnement du moteur (6) du véhicule (Vh).

**7.** Programme d'ordinateur comprenant des instructions de code de programme pour l'exécution des étapes du procédé selon l'une quelconque des revendications 1 à 4 lorsque ledit programme est exécuté par une unité de traitement (2) d'un système (1) selon l'une quelconque des revendications 5 et 6.

**8.** Véhicule (Vh) notamment un véhicule automobile comprenant un système (1) selon l'une quelconque des revendications 5 et 6.

**Patentansprüche**

**1.** Aufladeverfahren für eine in einem Fahrzeug (Vh) eingerichtete Batterie aus mehreren Bleiakkumulatoren, umfassend einen Schritt des Detektierens (8) eines Sulfatierungsgrads, insbesondere eines reversiblen Sulfatierungsgrads, der Batterie, wobei der Schritt einen Unterschritt des Inkrementierens (9) eines Werts (Ct) eines Zeitzählers (Cpt) in Bezug auf Nutzungs- und Parkperioden des Fahrzeugs (Vh) beinhaltet, wobei das Verfahren einen Schritt des Auslösens (23) einer Entsulfatierungsladung der Batterie umfasst, wenn der inkrementierte Wert (Ct) größer als oder gleich einem Schwellenwert (Cs) ist, wobei das Verfahren **dadurch gekennzeichnet ist, dass** der Unterschritt des Inkrementierens (9) Folgendes beinhaltet:

- eine Phase des Bestimmens (10) einer gewichteten Dauer (Tpk) der Parkperiode des Fahrzeugs (Vh),
- eine Phase des Bestimmens (16) einer gewichteten Dauer (Tpu) der Nutzungsperiode des Fahrzeugs (Vh),
- eine Phase des Bestimmens (21) des Werts (Ct) des Zeitzählers (Cpt) auf Basis der bestimmten gewichteten Dauern (Tpk, Tpu) der Park- bzw. Nutzungsperiode des Fahrzeugs (Vh),

wobei die Phase des Bestimmens (16) einer gewichteten Dauer (Tpu) der Nutzungsperiode des Fahrzeugs (Vh) Folgendes beinhaltet:

- eine Unterphase des Ermittelns (17) einer Dauer (Tu) der Nutzungsperiode des Fahrzeugs (Vh),
- eine Unterphase des Messens (18) eines Ladezustands (SOCu) der Batterie während der Nutzungsperiode,
- eine Unterphase des Bestimmens (19) eines Gewichtungskoeffizienten (Cfu) der Nutzungsdauer des Fahrzeugs (Vh) in Abhängigkeit von einem gemessenen Ladezustand (SOCu) der Batterie und Ladezustandsschwellenwerten (Su1, Su2),
- eine Unterphase des Berechnens (20) einer gewichteten Dauer (Tpu) der Nutzungsperiode des Fahrzeugs (Vh) in Abhängigkeit von der ermittelten Dauer (Tu) und dem Gewichtungskoeffizienten (Cfu).

2. Verfahren nach Anspruch 1, **dadurch gekennzeichnet, dass** eine Phase des Bestimmens (10) einer gewichteten Dauer (Tpk) der Parkperiode des Fahrzeugs (Vh) des Unterschritts des Inkrementierens (9) Folgendes beinhaltet:

- eine Unterphase des Ermittelns (11) einer Dauer (Tk) der Parkperiode des Fahrzeugs (Vh),
- eine Unterphase des Messens (12) eines Ladezustands (SOCp) der Batterie während der Parkperiode, insbesondere am Ende dieser Periode,
- eine Unterphase des Bestimmens (13) eines ersten Gewichtungskoeffizienten (Cfc) einer Parkdauer des Fahrzeugs (Vh) in Abhängigkeit von einem gemessenen Ladezustand (SOCp) und Ladezustandsschwellenwerten (Sc1, Sc2),
- eine Unterphase des Bestimmens (14) eines zweiten Gewichtungskoeffizienten (Cfs) einer Parkdauer des Fahrzeugs (Vh) in Abhängigkeit von einer Dauer (Tk) der ermittelten Parkperiode und Parkdauerschwellenwerten (St1, St2),
- eine Unterphase des Berechnens (15) einer gewichteten Dauer (Tpk) der Parkperiode des Fahrzeugs (Vh) in Abhängigkeit von einer ermittelten Dauer (Tk) und dem ersten und zweiten berechneten Koeffizienten (Cfs, Cfc).

3. Verfahren nach einem der vorhergehenden Ansprüche, **dadurch gekennzeichnet, dass** der Schritt des Auslösens (23) einen Unterschritt des Anlegens (24) einer Entsulfatierungsspannung (Vd) an die Klemmen der Batterie für eine vordefinierte Dauer (df) beinhaltet.

4. Verfahren nach einem der vorhergehenden Ansprüche, **dadurch gekennzeichnet, dass** eine Unterphase des Ermittelns (11) einer Dauer (Tk) der Parkperiode des Fahrzeugs (Vh) umgesetzt wird, wenn:

- eine Dauer (d1) der Nutzungsperiode des Fahrzeugs (Vh), die der Parkperiode des Fahrzeugs (Vh) direkt vorausgeht, größer als oder gleich einem Referenzdauerwert (dr) ist und/oder
- eine Dauer (d2) der Nutzungsperiode des Fahrzeugs (Vh), die direkt auf die Parkperiode des Fahrzeugs (Vh) folgt, größer als oder gleich einem Referenzdauerwert dr ist.

5. Aufladesystem (1) für eine in einem Fahrzeug (Vh) enthaltene Batterie aus mehreren Bleiakkumulatoren, das das Verfahren nach einem der vorhergehenden Ansprüche umsetzt, wobei das System (1) Folgendes beinhaltet: einen gesteuerten Wechselstromgenerator (3) und einen Sensor für eine den Betrieb der Batterie anzeigende Größe, die an die Klemmen der Batterie angeschlossen sind, sowie eine Verarbeitungseinheit (2), die eingerichtet ist, um das Verfahren nach einem der vorhergehenden Ansprüche umzusetzen und die über ein Verbindungsnetz (7) dieses Systems (1) mit dem Sensor und dem Wechselstromgenerator (3) verbunden ist.

6. System (1) nach dem vorhergehenden Anspruch, **dadurch gekennzeichnet, dass**:

- der Sensor einer den Betrieb (4) der Batterie anzeigenden Größe ein Batteriestromsensor ist und/oder
- das System (1) ein Bremsmanagementsystem (5) und ein Betriebsmanagementsystem für den Motor (6) des Fahrzeugs (Vh) beinhaltet.

7. Computerprogramm, das Programmcodeanweisungen zur Ausführung der Schritte des Verfahrens nach einem der Ansprüche 1 bis 4 beinhaltet, wenn das Programm durch eine Verarbeitungseinheit (2) eines Systems (1) nach einem der Ansprüche 5 und 6 ausgeführt wird.

8. Fahrzeug (Vh), insbesondere ein Kraftfahrzeug, das ein System (1) nach einem der Ansprüche 5 und 6 beinhaltet.

**Claims**

1. Recharging method for a lead-acid storage battery arranged in a vehicle (Vh) comprising a step of detecting (8) a level of sulfation, in particular a reversible level of sulfation of the battery, said step comprising a sub-step of incrementing (9) a value (Ct) of a time counter (Cpt) relating to periods in which the vehicle (Vh) is in use and parked, the method comprising a step of triggering (23) a battery desulfation charge when said incremented value (Ct) is higher than or equal to a threshold value (Cs), said method being **characterized in that** the incrementation sub-step (9) comprises:

- a phase of determining (10) a weighted duration (Tpk) of the period in which the vehicle (Vh) is parked;
- a phase of determining (16) a weighted duration (Tpu) of the period in which the vehicle (Vh) is in use;
- a phase of determining (21) the value (Ct) of the time counter (Cpt) from the weighted durations (Tpk, Tpu) determined from the periods in which the vehicle (Vh) is parked and in use, respectively,

the phase of determining (16) a weighted duration (Tpu) of the period in which the vehicle (Vh) is in use comprising:

- a sub-phase of estimating (17) a duration (Tu) relating to the period in which the vehicle (Vh) is in use;
- a sub-phase of measuring (18) a state of charge (SOCu) of the battery during the period of use;
- a sub-phase of determining (19) a weighting coefficient (Cfu) of the duration in which the vehicle (Vh) is in use according to a measured state of charge (SOCu) of the battery and state of charge thresholds (Su1, Su2);
- a sub-phase of calculating (20) a weighted duration (Tpu) relating to the period in which the vehicle (Vh) is in use according to the estimated duration (Tu) and the weighting coefficient (Cfu).

2. Method according to Claim 1, **characterized in that** a phase of determining (10) a weighted duration (Tpk) of the period in which the vehicle (Vh) is parked of the incrementation sub-step (9) comprises:

- a sub-phase of estimating (11) a duration (Tk) relating to the period in which the vehicle (Vh) is parked;
- a sub-phase of measuring (12) a state of charge (SOCp) of the battery during the parked period, in particular at the end of this period;
- a sub-phase of determining (13) a first weighting coefficient (Cfc) of a duration in which the vehicle (Vh) is parked according to a measured state of charge (SOCp) and state of charge thresholds (Sc1, Sc2);
- a sub-phase of determining (14) a second weighting coefficient (Cfs) of a duration in which the vehicle (Vh) is parked according to a duration (Tk) relating to the estimated parked period and parked duration thresholds (St1, St2);
- a sub-phase of calculating (15) a weighted duration (Tpk) relating to the period in which the vehicle (Vh) is parked according to an estimated duration (Tk) and the first and second calculated coefficients (Cfs, Cfc).

3. Method according to either of the preceding claims, **characterized in that** the triggering step (23) comprises a sub-step of applying (24) a desulfation voltage (Vd) to the terminals of the battery for a predefined duration (df).

4. Method according to any one of the preceding claims, **characterized in that** a sub-phase of estimating (11) a duration (Tk) relating to the period in which the vehicle (Vh) is parked is implemented from the moment when:

- a duration (d1) relating to the period in which the vehicle (Vh) is in use directly preceding the period in which the vehicle (Vh) is parked is longer than or equal to a reference duration value (dr); and/or
- a duration (d2) relating to the period in which the vehicle (Vh) is in use directly following the period in which the vehicle (Vh) is parked is longer than or equal to a reference duration value (dr) .

5. Recharging system (1) for a lead-acid storage battery comprised in a vehicle (Vh) implementing the method according to any one of the preceding claims, the system (1) comprising a controlled alternator (3) and a sensor for a quantity indicative of the operation of the battery which are connected to the terminals of the battery, and a processing unit (2) arranged to implement the method according to any one of the preceding claims and connected to the sensor and to the alternator (3) via a connecting network (7) of this system (1).

6. System (1) according to the preceding claim, **characterized in that**:

- the sensor for a quantity indicative of the operation (4) of the battery is a battery current sensor; and/or
- the system (1) comprises systems for managing braking (5) and for managing the operation of the engine (6) of the vehicle (Vh).

7. Computer program comprising program code instructions for the execution of the steps of the method according to any one of Claims 1 to 4 when said program is executed by a processing unit (2) of a system (1) according to either of Claims 5 and 6.

8. Vehicle (Vh), in particular a motor vehicle comprising a system (1) according to either of Claims 5 and 6.

**FIGURE 1**

Ct < Cs

Ct ≥ Cs

SOCf < Ng

SOCf ≥ Ng

Ec > Er

Ec ≤ Er

**FIGURE 2**

**FIGURE 3**

**FIGURE 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 006184650 B1
- US 006130522 A
- EP 2597719 B1
- US 006118251 A
- JP H06296302 B